# EUROPÄISCHE PATENTSCHRIFT

(11) **EP 3 197 581 B1**
(45) Veröffentlichungstag und Bekanntmachung des Hinweises auf die Patenterteilung: **01.05.2024**
(21) Anmeldenummer: 15767481.3
(22) Anmeldetag: 23.09.2015
(51) Int. Cl.: B01D 27/10, B01D 29/21

(54) **FILTERELEMENT, FILTER UND FILTERSYSTEM MIT RÜCKLAUFBYPASS**
FILTER ELEMENT, FILTER AND FILTER SYSTEM WITH RETURN BYPASS
ELEMENT DE FILTRE, FILTRE ET SYSTEM DE FILTRE AVEC DÉRIVATION DE RETOUR

(30) Priorität: 24.09.2014 DE 102014013852
(43) Veröffentlichungstag der Anmeldung: 02.08.2017
(73) Patentinhaber: MANN+HUMMEL GmbH, 71636 Ludwigsburg (DE)
(72) Erfinder: STRASSENBERGER, Norbert, 84166 Adlkofen (DE); TSCHEPE, Kathrin, 94469 Deggendorf (DE); WYHLER, Heiko, 70378 Stuttgart (DE); KOCKSCH, Christian, 68789 St Leon-Rot (DE); BANKS, Christopher, 79341 Kenzingen (DE); POSTEL, Martin, 67454 Haßloch (DE); THALMANN, Christian, 67346 Speyer (DE); PFLÜGER, Frank, 74343 Sachsenheim (DE); OPRISCH, Christine, 71739 Oberriexingen (DE)
(74) Vertreter: Mann + Hummel Intellectual Property
(86) Internationale Anmeldenummer: PCT/EP2015/071853
(87) Internationale Veröffentlichungsnummer: WO 2016/046256

(56) Entgegenhaltungen:
- EP-A1- 1 510 239
- WO-A1-00/77352
- WO-A1-2010/139706
- DE-A1-102009 061 063
- US-A- 4 954 252
- US-A- 4 959 141
- US-A- 5 868 931
- US-A1- 2003 140 792

## Beschreibung

### Technisches Gebiet

Die Erfindung betrifft ein Filterelement mit einem Filtermaterial, wobei das Filtermaterial von einer Rohseite zu einer Reinseite von zu filterndem Medium durchströmbar ist. Die Erfindung betrifft weiterhin einen Filter sowie ein Filtersystem.

### Stand der Technik

Es ist bekannt, Filter zum Filtrieren eines Mediums, insbesondere zum Filtrieren einer Flüssigkeit, einzusetzen.

Beispielsweise ist aus der EP 1 648 583 B1 ein Ölfilter bekannt geworden. Der Ölfilter weist ein Filterelement mit einem Überströmventil auf. Bei zu hohem Druck im Zulauf kommt es bei dem bekannten Ölfilter zu einem Überströmen bzw. Umgehen eines Filtermaterials des Filterelements. Dabei öffnet sich das Überströmventil, um einen direkten Durchfluss des Öls von der Rohseite zur Reinseite des Filters zu ermöglichen.

Werden Filter im Außenbereich eingesetzt, insbesondere in einem Kraftfahrzeug, kann es bei einer starken Veränderung der Außentemperatur zu einer Volumenänderung des Mediums, insbesondere beim Absinken der Außentemperatur zu einem Gefrieren des Mediums in Form einer Flüssigkeit, kommen. Die Volumenänderung kann zu einer Beschädigung des Filters führen.

Um eine solche Filterbeschädigung zu vermeiden, ist es aus der DE 10 2012 017 140 A1 bekannt geworden, ein Kompensationselement im Filter einzusetzen, das die Volumenänderung des Mediums im Filter ausgleicht. Ein solches Kompensationselement beansprucht jedoch verhältnismäßig viel Bauraum im Filter.

Ähnliche Filterelemente mit Kompensationselementen sind in den Schriften DE 10 2009 061 063 B4, EP 1 510 239 B1 und WO 2010/139 706 A1 beschrieben.

Bei Filtern wird daher oftmals auf ein Kompensationselement verzichtet und das Medium nach Beendigung des Filtrierens aus dem Filter abgepumpt, um eine Beschädigung des Filters bei Temperaturänderungen zu vermeiden. Insbesondere soll - wie zuvor erwähnt - eine Beschädigung des Filters durch im Filter gefrierendes Medium vermieden werden.

Aus der Offenlegungsschrift US 2003/140792 A1 ist ein Filter zum Entfernen von Feuchte aus einem Kühlmittel bekannt, welcher umkehrbar durchströmbar ist und in Wärmepumpen eingesetzt werden kann.

In dem Patent US 4 959 141 ist ein Kraftstofffilter mit Wasserabscheidefunktion und einem Sperrventil beschrieben.

Das Abpumpen des Mediums hat jedoch den Nachteil, dass Schmutzpartikel im Filtermaterial gelöst und ebenfalls mit abgepumpt werden. Hierdurch kann es zu einer Beschädigung der Pumpe bzw. von Drosseln, Ventilen oder dergleichen kommen.

### Offenbarung der Erfindung

Der Erfindung liegt daher die Aufgabe zugrunde, ein Filterelement, einen Filter und ein Filtersystem zu schaffen, die ein Abpumpen von Medium ohne Schmutzaustrag aus dem Filtermaterial ermöglichen.

Diese Aufgabe wird durch ein Filterelement mit den Merkmalen des Patentanspruchs 1 gelöst. Die Unteransprüche geben zweckmäßige Weiterbildungen an.

Die erfindungsgemäße Aufgabe wird somit gelöst durch ein Filterelement mit einem Filtermaterial, wobei das Filtermaterial von einer Rohseite zu einer Reinseite des Filterelements von zu filterndem Medium durchströmbar ist, wobei das Filterelement ein Rückschlagelement aufweist, das derart ausgebildet ist, einen Rückfluss gefilterten Mediums von der Reinseite zurück zur Rohseite, aber keinen Durchfluss ungefilterten Mediums von der Rohseite zur Reinseite zu ermöglichen.

Das Rückschlagelement ermöglicht somit zumindest einem Teil des Mediums eine Umgehung des Filtermaterials. Ein starkes "umgekehrtes" Durchströmen des Filtermaterials, d.h. ein starkes Durchströmen des Filtermaterials von der Reinseite zur Rohseite wird dadurch vermieden. Folglich kann ein Schmutzaustrag aus dem Filtermaterial verhindert werden.

Das Filterelement weist vorzugsweise an seiner Außenseite die Rohseite und an seiner Innenseite die Reinseite auf. Mit anderen Worten weist das Filterelement vorzugsweise eine äußere Rohseite und eine innere Reinseite auf. Das Filterelement ist dadurch konstruktiv besonders einfach ausbildbar.

Das Filterelement ist in Form eines Filterelements für eine Flüssigkeit, insbesondere in Form eines Filterelements für wässrige Harnstofflösung, ausgebildet.

Das Filterelement ist in Form eines Rundfilterelements ausgebildet. Das Filtermaterial ist dabei sternförmig gefaltet, um eine große Oberfläche bereitzustellen.

Besonders bevorzugt erfolgt der Zustrom des zu filternden Mediums radial, d.h. senkrecht zur mittigen Filterelementlängsachse, auf das Filtermaterial und der Abstrom des gefilterten Mediums axial, d.h. in Richtung oder parallel zur mittigen Filterelementlängsachse.

Erfindungsgemäß sind Rückschlagelement und Filtermaterial so aufeinander abgestimmt, dass der Strömungswiderstand des Rückschlagelements beim Rückfluss gefilterten Mediums von der Reinseite zur Rohseite kleiner ist als der Strömungswiderstand des Filtermaterials beim Rückfluss gefilterten Mediums von der Reinseite zurück zur Rohseite. Das Medium wird dadurch beim Abpumpen im Wesentlichen vollständig das Filtermaterial über das Rückschlagelement umgehen, sodass ein Schmutzaustrag aus dem Filtermaterial praktisch vollständig vermieden wird. Der Strömungswiderstand bezieht sich dabei bevorzugt auf wässrige Harnstofflösung.

Das Filterelement kann eine erste Endscheibe aufweisen, wobei das Rückschlagelement im Bereich der ersten Endscheibe angeordnet oder ausgebildet ist. Besonders bevorzugt ist das Rückschlagelement unmittelbar an der ersten Endscheibe angeordnet. Hierdurch ergibt sich eine besonders platzsparende Anordnung des Rückschlagelements.

Weiter bevorzugt ist das Filtermaterial axial von der ersten Endscheibe und einer zweiten Endscheibe des Filterelements eingefasst. Das Filtermaterial kann mit den Endscheiben verschweißt und/oder verklebt sein, um hohen Drücken standhalten zu können. Dabei kann das Filtermaterial bei der Herstellung des Filterelements in die Schmelze der Endscheiben und/oder in Klebstoff an den Endscheiben eingebracht werden.

Das Rückschlagelement kann in Form eines Rückschlagventils ausgebildet sein. Erfindungsgemäß weist das Rückschlagelement eine erste Durchgangsausnehmung zum Strömen des Mediums von der Reinseite auf die Rohseite auf, wobei das Rückschlagelement einen Blockadekörper zum Verschluss der ersten Durchgangsausnehmung aufweist. Der Blockadekörper kann dabei an einem Anschlag des Rückschlagelements anliegen, wenn der Druck des Mediums auf der Rohseite höher ist als auf der Reinseite und dadurch die erste Durchgangsausnehmung verschließen und demgegenüber die erste Durchgangsausnehmung zumindest teilweise freigeben, wenn der Druck des Mediums auf der Reinseite größer ist als auf der Rohseite. Die erste Durchgangsausnehmung ist vorzugsweise in der ersten Endscheibe ausgebildet.

Um den Rückfluss des Mediums von der Reinseite auf die Rohseite sicher zu gewährleisten können mehrere Rückschlagelemente vorgesehen sein. Das Rückschlagelement bzw. die Rückschlagelemente kann/können mehrere Durchgangsausnehmungen aufweisen, die jeweils durch einen Blockadekörper öffenbar verschließbar sind. Bevorzugt verschließt ein einziger Blockadekörper öffenbar alle Durchgangsausnehmungen des Rückschlagelements bzw. verschließt jeweils ein einziger Blockadekörper öffenbar alle Durchgangsausnehmungen der jeweiligen Rückschlagelemente. Die Durchgangsausnehmungen können in der ersten Endscheibe ausgebildet sein.

Der Blockadekörper ist erfindungsgemäß in Form einer Membran ausgebildet, die auf der Rohseite des Filterelements die erste Durchgangsausnehmung verdeckt. Eine Membran, insbesondere eine einteilige Membran, ist besonders einfach und kostengünstig fertigbar.

In erfindungsgemäßer Ausgestaltung des Rückschlagelements ist die Membran aus Silikon oder aus synthetischem Kautschuk, insbesondere aus Ethylen-Propylen-Dien-Kautschuk (EPDM), ausgebildet. Diese Materialien ermöglichen eine einfache Herstellbarkeit der Membran bei gleichzeitig langer Lebensdauer. Besonders bevorzugt ist die Membran aus hydriertem Acrylnitrilbutadien-Kautschuk (HNBR) ausgebildet, da sich dieses Material durch besonders hohe Mineralölbeständigkeit und insbesondere durch besonders hohe Dieselbeständigkeit, auszeichnet.

Um die Dichtheit des Rückschlagelements bezüglich eines Durchflusses von der Rohseite auf die Reinseite sicher zu gewährleisten, wird der Blockadekörper vorzugsweise durch ein elastisches Element gegen die erste Durchgangsausnehmung gepresst. Besonders bevorzugt wird dabei die Membranoberfläche zumindest teilweise durch ein elastisches Element gegen die erste Durchgangsausnehmung gepresst.

Das elastische Element kann in Form einer Feder ausgebildet sein. Besonders bevorzugt ist das elastische Element in Form des Membrankörpers ausgebildet. Hierdurch kann auf ein separates elastisches Element verzichtet werden.

Zur Befestigung der Membran kann diese einen Rastvorsprung aufweisen, wobei der Rastvorsprung an einer Rastausnehmung des Rückschlagelements befestigt ist. Die Rastausnehmung ist vorzugsweise durchgängig ausgebildet, sodass der Rastvorsprung die Rastausnehmung hintergreift.

Eine konstruktiv besonders einfache Ausbildung des Rückschlagelements erfolgt, wenn die Membran axialsymmetrisch, insbesondere rotationssymmetrisch, zur mittigen Längsachse der Rastausnehmung ausgebildet ist.

Das Rückschlagelement kann alternativ zur erfindungsgemäßen Ausgestaltung auch einen anderen konstruktiven Aufbau aufweisen und beispielsweise als ein sogenanntes (Enten-)Schnabelventil ausgebildet sein. Ein solches Ventil ist am Markt kostengünstig vorkonfektioniert erhältlich und besonders einfach am Filterelement zu montieren.

Eines oder mehrere der Rückschlagelemente können eines oder mehrere der zuvor beschriebenen Merkmale aufweisen.

Nach einer Weiterbildung der Erfindung weist das Filterelement zusätzlich zu dem vorstehend erläuterten Rückschlagelement ein Rückschlagventil auf, mittels dessen während eines Rückspülvorgangs (=Purging) des Filters bzw. des Filterelements ein unerwünschter Rückfluss des gefilterten Mediums bzw. von Luft über das Filtermaterial (=Filtermedium) unterbunden wird. Dadurch kann einerseits einem unerwünschten Ablösen von am Filtermaterial rohseitig anhaftenden Verunreinigungen nochmals zuverlässiger entgegengewirkt werden. Darüber hinaus kann dadurch ein zuverlässigeres Ansprechverhalten des Rückschlagelements auf eine Druckumkehr zwischen Rein- und Rohseite selbst bei geringen Differenzdrücken realisiert werden. Das Rückschlagventil kann gemeinsam mit dem Rückschlagelement an derselben Endscheibe des Filterelements angeordnet sein. Das Rückschlagventil kann insbesondere in einer dem Rückschlagelement entsprechenden Weise ausgebildet sein.

Die erfindungsgemäße Aufgabe wird weiterhin gelöst durch einen Filter mit einem Filtergehäuse und einem im Filtergehäuse angeordneten Filterelement, wobei das Filterelement ein Filtermaterial aufweist, das von einer Rohseite zu einer Reinseite des Filters von zu filterndem Medium durchströmbar ist, wobei der Filter ein Rückschlagelement aufweist, das derart ausgebildet ist, einen Rückfluss gefilterten Mediums von der Reinseite zurück zur Rohseite, aber keinen Durchfluss ungefilterten Mediums von der Rohseite zur Reinseite zu ermöglichen.

Das Filterelement weist vorzugsweise an seiner Außenseite die Rohseite und an seiner Innenseite die Reinseite auf. Das Filterelement ist dadurch konstruktiv besonders einfach ausbildbar.

Das Rückschlagelement kann somit im Filterelement und/oder einem anderen Bereich des Filters, insbesondere im Filtergehäuse, vorgesehen sein. Vorzugsweise weist der erfindungsgemäße Filter ein Filtergehäuse und ein zuvor beschriebenes, im Filtergehäuse angeordnetes, Filterelement auf, wobei das Filterelement das Rückschlagelement aufweist. Wenn das Filterelement das Rückschlagelement aufweist, kann ein Filter mit der "Bypassfunktion" des Rückschlagelements nachgerüstet werden, indem lediglich das bekannte Filterelement gegen ein erfindungsgemäßes Filterelement ausgetauscht wird. Die bekannten Filter sind dadurch leicht mit einer solchen "Bypassfunktion" nachrüstbar.

Das Rückschlagelement des Filters weist bevorzugt eines oder mehrere der zuvor beschriebenen Merkmale auf. Weiterhin können am Filter mehrere Rückschlagelemente vorgesehen sein, die eines oder mehrere der zuvor beschriebenen Merkmale aufweisen.

Die erfindungsgemäße Aufgabe wird schließlich gelöst durch ein Filtersystem mit einem zuvor beschriebenen Filter und einer ersten Pumpe zur Zuleitung von zu filterndem Medium zu dem Filter. Die erste Pumpe kann zum Abpumpen des Mediums von dem Filter ausgebildet sein. Alternativ oder zusätzlich dazu kann das Filtersystem eine zweite Pumpe zum Abpumpen von Medium aus dem Filter aufweisen. Das Filtersystem kann weiterhin ein Ventil, insbesondere ein Absperrventil und/oder eine Drossel aufweisen, das/die fluidisch zwischen die Pumpe und den Filter geschaltet sind.

### Kurze Beschreibung der Zeichnungen

Weitere Merkmale und Vorteile der Erfindung ergeben sich aus der nachfolgenden detaillierten Beschreibung von Ausführungsbeispielen der Erfindung, anhand der Zeichnung, die erfindungswesentliche Einzelheiten zeigt sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.
- Fig. 1: zeigt dabei eine Ansicht eines erfindungsgemäßen Filtersystems mit einem Filter, wobei der Filter in einer halbseitigen Schnittansicht und die weiteren Komponenten des Filtersystems schematisch dargestellt sind;
- Fig. 2: zeigt ein weiteres Filtersystems mit einem Filter in einem ausschnittsweisen Längsschnitt;
- Fig. 3: zeigt den in Fig. 2 mit B bezeichneten Detailausschnitt des Filtersystems in einer vergrößerten Darstellung; und
- Fig. 4: zeigt ein Filterelement für ein Filtersystem, insbesondere für eine wässrige Harnstofflösung, in einem teilweisen Längsschnitt.

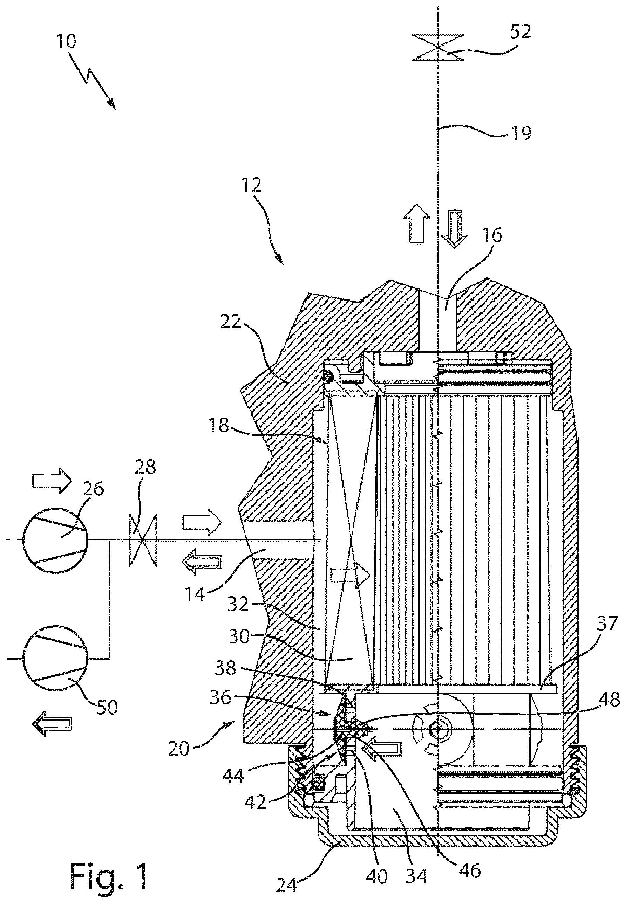

Fig. 1 zeigt ein Filtersystem 10 mit einem Filter 12. Der Filter 12 ist in Form eines Filters für wässrige Harnstofflösung ausgebildet. Er weist einen Zulauf 14 und einen Ablauf 16 auf. Der Zulauf 14 führt radial, der Ablauf 16 axial zu einem Filterelement 18. Das Filterelement 18 ist in Form eines Rundfilters, d.h. im Wesentlichen axialsymmetrisch zu seiner mittigen Filterelementlängsachse 19 ausgebildet. Das Filterelement 18 ist in einem Filtergehäuse 20 des Filters 12 angeordnet. Das Filtergehäuse 20 weist einen Filtergehäusekörper 22 auf, der den Zulauf 14 und den Ablauf 16 aufweist. Der Filtergehäusekörper 22 ist vorzugsweise fest mit einem Kraftfahrzeug verbunden. Um einen Wechsel des Filterelements 18 zu ermöglichen, ist der Filtergehäusekörper 22 reversibel lösbar mit einem Deckel 24 des Filtergehäuses 20 verbunden.

Dem Filter 12 ist durch eine erste Pumpe 26 zu filterndes Medium, hier zu filternde wässrige Harnstofflösung, zuführbar. Der Weg des zu filternden Mediums ist in Fig. 1 durch einfach linierte Pfeile gekennzeichnet. Das zu filternde Medium passiert dabei auf seinem Weg zum Filter 12 ein erstes Absperrventil 28.

Das Filterelement 18 umfasst ein Filtermaterial 30 zum Filtrieren von Schmutzpartikeln. Die filtrierten Schmutzpartikel verbleiben im Filtermaterial 30. Das Filtermaterial 30 trennt somit eine Rohseite 32 des Filters 12 von dessen Reinseite 34.

Zwischen Rohseite 32 und Reinseite 34 ist ein Rückschlagelement 36 vorgesehen. Das Rückschlagelement 36 ist an einer ersten Endscheibe 37 des Filterelements 18 ausgebildet. Das Rückschlagelement 36 weist eine erste Durchgangsausnehmung 38, eine zweite Durchgangsausnehmung 40 und eine Membran 42 auf. Das Rückschlagelement 36 weist zusätzlich zu den Durchgangsausnehmungen 38, 40 zwei weitere Durchgangsausnehmungen auf, die symmetrisch zu den Durchgangsausnehmungen 38, 40 angeordnet, jedoch in der vorliegenden Schnittansicht nicht sichtbar sind. Die Membran 42 liegt mit einem schirmförmigen Kopfteil 44 auf der Rohseite 32 auf den Durchgangsausnehmungen 38, 40 auf, um diese zu verschließen. Die Membran 42 ist durch eine durchgehende Rastausnehmung 46 hindurchgeführt. Ein Rastvorsprung 48 der Membran 42 ist an der Rastausnehmung 46 befestigt, indem er die Rastausnehmung 46 hintergreift. Die Membran 42 ist aus einem elastischen Material ausgebildet, wobei sie die Durchgangsausnehmungen 38, 40 bei höherem Druck auf der Rohseite 32 als auf der Reinseite 34 verschließt und bei höherem Druck auf der Reinseite 34 als auf der Rohseite 32 öffnet.

Mittels des Rückschlagelements 36 kann dadurch gefiltertes Medium von der Reinseite 34 zur Rohseite 32 geführt werden, ohne dass das gefilterte Medium das Filtermaterial 30 passiert. Im Filter 12 enthaltenes Medium kann somit durch eine zweite Pumpe 50 aus dem Filter 12 gepumpt werden, ohne dass im Filtermaterial 30 abgeschiedene Schmutzpartikel herausgelöst werden und das erste Absperrventil 28 und/oder die zweite Pumpe 50 verschmutzen und beschädigen. Das Abpumpen von Medium erfolgt in Richtung der doppelt liniert dargestellten Pfeile.

Das Filtersystem weist ein zweites Absperrventil 52 auf, das in Bezug auf den Filter 12 dem Ablauf 16 fluidisch nachgeschaltet ist. Zum Abpumpen wird das zweite Absperrventil 52 geschlossen und das erste Absperrventil 28 geöffnet, um den Filter 12 vollständig zu entleeren. Danach wird auch das erste Absperrventil 28 geschlossen. Durch die Entleerung des Filters 12 wird eine Beschädigung des Filters 12 durch Gefrieren von Medium im Filter 12 verhindert. Es versteht sich, dass das zweite Absperrventil 52 zum Abpumpen des Mediums auch geöffnet bleiben kann, um ein Einströmen von Luft (bzw. Abgasen eines Verbrennungsmotors) über den Ablauf 16 in das Filtergehäuse 20 zu ermöglichen.

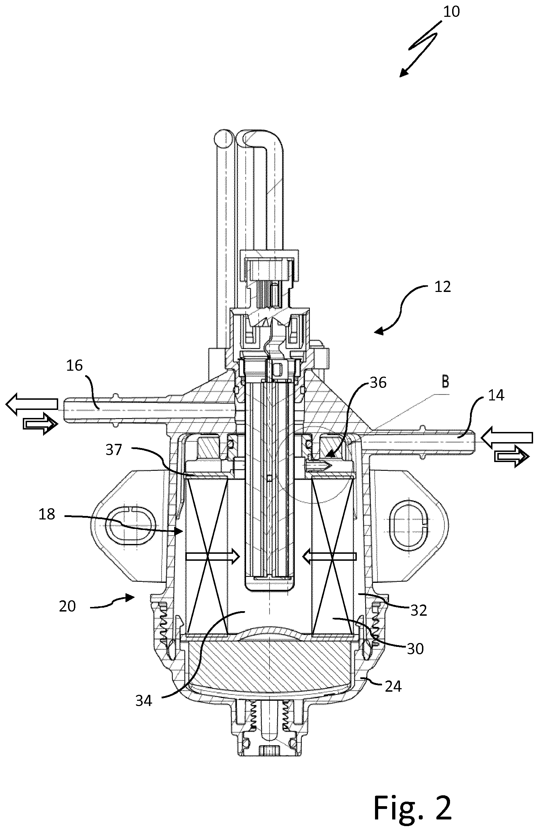

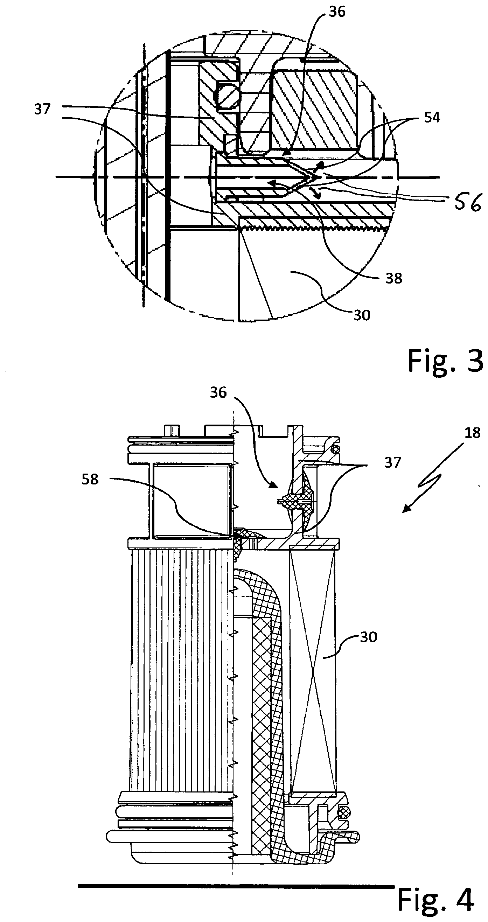

Das Filterelement 18 kann im Filtergehäuse 20 grundsätzlich auch mit nach oben weisender erster Endscheibe 37 angeordnet sein, wie dies bei dem in Fig. 2 gezeigten Ausführungsbeispiel des Filtersystems 10 der Fall ist. Es versteht sich, dass das an der ersten Endscheibe 37 des Filterelements 18 ausgebildete Rückschlagelement 36 darüber hinaus einen anderen Aufbau als bei dem in Figur 1 dargestellten Ausführungsbeispiel aufweisen kann. So kann das Rückschlagelement 36 beispielsweise gemäß den Figuren 2 und 3 als ein sogananntes (Enten-)Schnabelventil ausgebildet sein. Das Rückschlagelement 36 erstreckt sich in diesem Fall vorzugsweise durch eine Ausnehmung der ersten Endscheibe 37 des Filterelements 18 hindurch. Das Rückschlagelement 36 bildet dabei eine Durchgangsausnehmung 38 für das Medium aus, die gemäß der Detaildarstellung des Schnabelventil in Fig. 3 mittels zweier Ventilklappen 54 des Schnabelventils fluiddicht verschließbar ist. Bei einem höherem Druck auf der Rohseite 32 als auf der Reinseite 34 liegen die beiden Ventilklappen 54 des Rückschlagelements fluiddicht aneinander an. Das Schnabelventil befindet sich mithin in seiner Schließstellung, in der die Durchgangsausnehmung 38 des Schnabelventils fluiddicht verlegt ist. In Schließstellung des Schnabelventils wird somit eine Bypasströmung des zu filternden Mediums um das Filtermaterial 30 herum unterbunden. Bei einem höherem Druck auf der Reinseite 34 als auf der Rohseite 32, d.h. beim Ausblasen bzw. Absaugen der wässrigen Harnstofflösung aus dem Zulauf 14, dem Ablauf 16 sowie dem Filtergehäuse 20 (Fig. 3) werden die beiden Ventilklappen 54 des Rückschlagelements 36 auseinanderbewegt, wie dies in Fig. 3 mit Pfeilen 56 verdeutlicht ist, und das Rückschlagelement 36 so in seine Öffnungsstellung überführt.

Das Filterelement 18 kann gemäß dem in Fig. 4 dargestellten Ausführungsbeispiel zusätzlich zu den vorstehend erläuterten Rückschlagelementen 36 ein Rückschlagventil 58 aufweisen, durch das beim Austrag der wässrigen Harnstofflösung aus dem Filtersystem (= Purging) ein Rückstrom des gefilterten Mediums bzw. nachströmender Luft durch das Filtermaterial 30 hindurch vollständig unterbunden wird. Dadurch kann einem unerwünschten Ablösen von aus dem Medium gefiltertem Schmutz vom Filtermaterial 30 während des vorgenannten Rückspülvorgangs nochmals zuverlässiger entgegengewirkt werden. Das Rückschlagventil 58 kann dabei insbesondere an der ersten Endscheibe 37 des Filterelements 18 angeordnet und in einer dem Rüschlagelement 36 entsprechenden Weise ausgebildet sein. Durch ein solches Rückschlagventil 58 kann beim Rückspülvorgang ein nochmals zuverlässigeres Ansprechverhalten des Rückschlagelements 36, inbesondere bei nur geringen Druckunterschieden zwischen der Reinseite 34 und der Rohseite 32, realisiert werden. Es versteht sich, dass bei der in Fig. 4 gezeigten Ausführungsform des Filterelements 18 eine vollständige Entleerung des Mediums aus dem Filterelement 18 durch Rückspülung (Purging) nicht realisiert wird.

Zusammenfassend betrifft die Erfindung einen Filter zum Filtrieren eines Mediums, insbesondere zum Filtrieren wässriger Harnstofflösung. Der Filter weist ein Filterelement mit einem Filtermaterial auf. Das Medium ist zumindest teilweise, insbesondere vollständig, aus dem Filter abpumpbar, ohne dass es das Filtermaterial passiert, sodass aus dem Medium gefilterter Schmutz nicht aus dem Filtermaterial gelöst und mit abgepumpt wird. Hierzu ist im Filter, insbesondere im Filterelement, ein Rückschlagelement vorgesehen, dass einen Fluss des Mediums von der Rohseite zur Reinseite des Filters blockiert, aber einen Fluss des Mediums von der Reinseite zur Rohseite des Filters ermöglicht. Das Rückschlagelement ist vorzugsweise in Form eines Schnabelventils oder einer pilzförmigen Membran ausgebildet. Die Membran ist dabei weiter bevorzugt durch eine Verdickung im Fußteil der Pilzform in einer durchgehenden Ausnehmung des Filters verankert. Der Kopfteil der Pilzform deckt bevorzugt zumindest eine Durchgangsausnehmung des Filters zum Durchfluss des Mediums von der Reinseite zur Rohseite ab.

## Patentansprüche

1. Filtersystem mit einem Filter (12) für wässrige Harnstofflösung, mit einer ersten Pumpe (26) und mit einer zweiten Pumpe (50), wobei der Filter (12) ein Filtergehäuse (20), einen Zulauf (14), einen Ablauf (16) und ein in dem Filtergehäuse (20) angeordnetes Filterelement (18) aufweist, welches als Rundfilterelement ausgebildet ist, mit einem sternförmig gefalteten Filtermaterial (30) zur Filtration wässriger Harnstofflösung, wobei das Filtermaterial (30) von einer Rohseite (32) zu einer Reinseite (34) des Filterelements (18) von zu filterndem Medium durchströmbar ist, wobei das Filterelement (18) ein Rückschlagelement (36) aufweist, das derart ausgebildet ist, einen Rückfluss gefilterten Mediums von der Reinseite (34) zurück zur Rohseite (32), aber keinen Durchfluss ungefilterten Mediums von der Rohseite (32) zur Reinseite (34) zu ermöglichen, wobei das Filterelement (18) eine erste Endscheibe (37) aufweist, wobei das zu filternde Medium dem Filter (12) über die erste Pumpe (26) zuführbar ist und wobei in dem Filter (12) enthaltenes Medium über die zweite Pumpe (50) aus dem Filter (12) pumpbar ist **dadurch gekennzeichnet, dass** das Rückschlagelement (36) unmittelbar an der ersten Endscheibe (37) angeordnet ist und das Rückschlagelement (36) eine erste Durchgangsausnehmung (38) in der ersten Endscheibe (37) und eine Membran (42) aus Silikon oder aus synthetischem Kautschuk aufweist, die auf der Rohseite (32) des Filterelements (18) die erste Durchgangsausnehmung (38) verdeckt, wobei die Membran (42) die Durchgangsausnehmung (38) bei höherem Druck auf der Rohseite (32) als auf der Reinseite (34) verschließt und bei höherem Druck auf der Reinseite (34) als auf der Rohseite (32) öffnet, sodass gefiltertes Medium von der Reinseite (34) zur Rohseite (32) geführt werden kann, ohne dass das gefilterte Medium das Filtermaterial (30) passiert.

2. Filtersystem nach Anspruch 1, bei dem die Membranoberfläche zumindest teilweise durch ein elastisches Element gegen die Durchgangsausnehmung (38) gepresst wird.

3. Filtersystem nach Anspruch 2, bei dem das elastische Element in Form des Membrankörpers ausgebildet ist.

4. Filtersystem nach Anspruch 1, bei dem die Membran (42) einen Rastvorsprung (48) aufweist, wobei der Rastvorsprung (48) an einer Rastausnehmung (46) des Rückschlagelements (36) befestigt ist.

5. Filtersystem nach Anspruch 4, bei dem die Membran (42) axialsymmetrisch zur mittigen Längsachse der Rastausnehmung (46) ausgebildet ist.

6. Filtersystem nach einem der vorhergehenden Ansprüche, **dadurch gekennzeichnet, dass** das Filterelement (18) zusätzlich zu dem Rückschlagelement (36) ein Rückschlagventil (58 ) aufweist, um einen Rückfluss gefilterten Mediums von der Reinseite (34) zur Rohseite (32) durch das Filtermaterial (30) hindurch zu unterbinden.

7. Filtersystem nach Anspruch 6, **dadurch gekennzeichnet, dass** das Rückschlagventil (58) an der ersten Endscheibe (37) des Filterelements (18) angeordnet ist.

## Claims

1. A filter system having a filter (12) for an aqueous urea solution, having a first pump (26) and having a second pump (50), wherein the filter (12) features a filter housing (20), a supply line (14), a discharge line (16) and a filter element (18) disposed in the filter housing (20), said filter element being designed as round filter element, having a star-shaped folded filter material (30) for filtering aqueous urea solution, wherein the filter material (30) can be flowed through by a medium to be filtered from a raw side (32) to a clean side (34) of the filter element (18), wherein the filter element (18) features a non-return element (36), which is designed to allow a return flow of the filtered medium from the clean side (34) back to the raw side (32), but no flow of unfiltered medium from the raw side (32) to the clean side (34), wherein the filter element (18) features a first end disc (37), wherein the medium to be filtered can be supplied to the filter (12) via the first pump (26) and wherein a medium contained in the filter (12) can be pumped out of the filter (12) via the second pump (50) **characterized in that** the non-return element (36) is directly disposed on the first end disc (37) and the non-return element (36) features a first passage recess (38) in the first end disc (37) and a membrane (42) made of silicone or synthetic rubber, said membrane covering the first passage recess (38) on the raw side (32) of the filter element (18), wherein the membrane (42) closes the passage recess (38) at a higher pressure on the raw side (32) than on the clean side (34) and opens it at a higher pressure on the clean side (34) than on the raw side (32), so that the filtered medium can be guided from the clean side (34) to the raw side (32) without the filtered medium passing through the filter material (30).

2. The filter system according to claim 1, in which the membrane surface is at least partially pressed against the passage recess (38) through an elastic element.

3. The filter system according to claim 2, in which the elastic element is designed in the shape of the membrane body.

4. The filter system according to claim 1, in which the membrane (42) features a latching projection (48), wherein the latching projection (48) is attached to a latching recess (46) of the non-return element (36).

5. The filter system according to claim 4, in which the membrane (42) is designed axisymmetrically to the central longitudinal axis of the latching recess (46).

6. The filter system according to one of the preceding claims, **characterized in that** the filter element (18) features, in addition to the non-return element (36), a non-return valve (58) in order to prevent a return flow of the filtered medium from the clean side (34) to the raw side (32) through the filter material (30).

7. The filter system according to claim 6, **characterized in that** the non-return valve (58) is disposed on the first end disc (37) of the filter element (18).

## Revendications

1. Système de filtre ayant un filtre (12) pour une solution d'urée aqueuse, ayant une première pompe (26) et ayant une seconde pompe (50), le filtre (12) présentant un boîtier de filtre (20), une arrivée (14), une évacuation (16) et un élément de filtre (18) disposé dans le boîtier de filtre (20) et conçu en tant qu'élément de filtre rond, ayant un matériau filtrant (30) plié en étoile destiné à filtrer une solution d'urée aqueuse, le matériau filtrant (30) pouvant être traversé par le fluide devant être filtré depuis un côté brut (32) jusqu'à un côté pur (34) de l'élément de filtre (18), l'élément de filtre (18) présentant un élément antiretour (36), qui est conçu de sorte à permettre un reflux d'un milieu filtré depuis le côté pur (34) en retour vers le côté brut (32) sans permettre un écoulement en retour d'un milieu non filtré depuis le côté brut (32) vers le côté pur (34), l'élément de filtre (18) présentant un premier disque d'extrémité (37), le fluide destiné à être filtré pouvant être amené au filtre (12) par l'intermédiaire de la première pompe (26) et le milieu contenu dans le filtre (12) pouvant être pompé hors du filtre (12) par la seconde pompe (50) **caractérisé en ce que** l'élément antiretour (36) est disposé directement sur le premier disque d'extrémité (37) et l'élément antiretour (36) présente un premier évidement de passage (38) dans le premier disque d'extrémité (37) et une membrane (42) en silicone ou en caoutchouc synthétique, la membrane recouvrant le premier évidement de passage (38) sur le côté brut (32) de l'élément de filtre (18), la membrane (42) fermant l'évidement de passage (38) lorsque la pression est plus élevée du côté brut (32) que du côté pur (34) et l'ouvrant lorsque la pression est plus élevée du côté pur (34) que du côté brut (32), de sorte que le milieu filtré peut être guidé du côté pur (34) vers le côté brut (32) sans que le milieu filtré traverse le matériau filtrant (30).

2. Système de filtre selon la revendication 1, dans lequel la surface de la membrane est pressée, au moins partiellement, contre l'évidement de passage (38) par un élément élastique.

3. Système de filtre selon la revendication 2, dans lequel l'élément élastique est conçu sous la forme du corps de membrane.

4. Système de filtre selon la revendication 1, dans lequel la membrane (42) présente une saillie d'encliquetage (48), la saillie d'encliquetage (48) étant attachée sur un renfoncement d'encliquetage (46) de l'élément antiretour (36).

5. Système de filtre selon la revendication 4, dans lequel la membrane (42) est réalisée de manière axisymétrique par rapport à l'axe longitudinal centré du renfoncement d'encliquetage (46).

6. Système de filtre selon l'une quelconque des revendications précédentes, **caractérisé en ce que** l'élément de filtre (18) présente, en complément de l'élément antiretour (36), un clapet antiretour (58) pour empêcher un reflux de milieu filtré du côté pur (34) vers le côté brut (32) à travers le matériau filtrant (30).

7. Système de filtre selon la revendication 6, **caractérisé en ce que** le clapet antiretour (58) est disposé sur le premier disque d'extrémité (37) de l'élément de filtre (18).
